# EUROPEAN PATENT APPLICATION

(11) **EP 4 700 461 A1**
(43) Date of publication of application: **25.02.2026**
(21) Application number: 24791915.2
(22) Date of filing: 11.04.2024
(51) Int. Cl.: G02F 1/133, B60J 3/04

(54) **METHOD AND APPARATUS FOR CONTROLLING SWITCHABLE GLASS AND VEHICLE AND ELECTRONIC DEVICE**

(30) Priority: 18.04.2023 CN 202310413075
(71) Applicant: Boe Technology Group Co., Ltd., Beijing 100015 (CN); Beijing BOE Technology Development Co., Ltd., Beijing 100176 (CN)
(72) Inventor: FENG, Hongbo, Beijing 100176 (CN); ZHAO, Junjie, Beijing 100176 (CN)
(74) Representative: Isarpatent
(86) International application number: PCT/CN2024/087281
(87) International publication number: WO 2024/217330

(57) **Abstract**

A method and apparatus for controlling switchable glass and a vehicle and an electronic device. The method for controlling switchable glass comprises: acquiring distance information between a target object and a vehicle (S101); controlling an input signal of switchable glass of the vehicle according to the distance information (S 102); and changing the light transmittance of the switchable glass by means of the input signal (S103). Distance information between a target object and a vehicle is acquired, and an input signal of switchable glass is controlled according to the distance information, so that flexible regulation of the light transmittance of the switchable glass is realized, thereby improving the user experience.

## Description

### CROSS-REFERENCE TO RELATED APPLICATION

The disclosure claims the priority of the Chinese patent application filed on April 18th, 2023 before the CNIPA, China National Intellectual Property Administration with the application number of 202310413075.1 and the title of "METHOD AND APPARATUS FOR CONTROLLING SWITCHABLE GLASS AND VEHICLE AND ELECTRONIC DEVICE", which is incorporated herein in its entirety by reference.

### TECHNICAL FIELD

The disclosure relates to the technical field of intelligent vehicles, and more particularly, relates to a method and apparatus for controlling switchable glass, a vehicle and an electronic device.

### BACKGROUND

Switchable glass is a novel photoelectric glass product, which may change its own light transmittance according to a received voltage signal or current signal. With the development of intelligent, electrified and networked vehicles, switchable glass is widely applied in intelligent cockpit systems of vehicles to achieve adjustable light transmittances of the vehicles.

However, at present, the light transmittance of the switchable glass of the vehicle is mainly manually adjusted by a user by means of a corresponding cockpit control button inside the vehicle, and this manual adjustment method is not flexible enough, so the user may control the light transmittance of the glass only after the vehicle is unlocked. Therefore, it is necessary to provide a method and apparatus for controlling switchable glass, a vehicle and an electronic device, which are intended to achieve flexible control over a light transmittance of switchable glass of a vehicle.

### SUMMARY

Embodiments of the disclosure provide a method and apparatus for controlling switchable glass, a vehicle and an electronic device, which are conducive to achieving flexible control over a light transmittance of glass and promoting the user experience.

In a first aspect, a method for controlling switchable glass is provided. The method includes:
acquiring distance information between a target object and a vehicle;
controlling an input signal of the switchable glass of the vehicle according to the distance information; and
changing a light transmittance of the switchable glass by means of the input signal.

In a second aspect, an apparatus for controlling switchable glass is provided, comprising:
a distance information acquisition module, configured to acquire distance information between a target object and a vehicle;
an input signal control module, configured to control an input signal of the switchable glass of the vehicle according to the distance information; and
a change module, configured to change a light transmittance of the switchable glass by means of the input signal.

In a third aspect, a vehicle is provided, comprising an intelligent cockpit system, wherein the intelligent cockpit system is configured to perform the steps of the method for controlling the switchable glass according to the first aspect.

In a fourth aspect, an electronic device is provided, comprising a processor and a memory, wherein the memory is configured to have programs or instructions stored thereon which run on the processor; and the programs or instructions, when executed by the processor, implement the steps of the method for controlling the switchable glass according to the first aspect.

In a fifth aspect, a readable storage medium is provided, which is configured to have programs/instructions stored thereon. The programs/instructions, when executed by a processor, implement the steps of the method for controlling the switchable glass according to the first aspect.

In a sixth aspect, a chip is provided, comprising a processor and a communication interface. The communication interface is coupled to the processor. The processor is configured to run programs or instructions to implement the steps of the method for controlling the switchable glass according to the first aspect.

In a seventh aspect, a computer program/program product is provided. The computer program/program product is stored in a storage medium. The computer program/program product is executed by at least one processor to implement the steps of the method for controlling the switchable glass according to the first aspect.

According to the embodiments of the disclosure, the distance information between the target object and the vehicle is acquired, the input signal of the switchable glass of the vehicle is controlled according to the distance information, and the light transmittance of the switchable glass is automatically changed by means of this input signal, so that the light transmittance of the glass is flexibly adjusted without manual control of the user, thereby improving the user experience.

### BRIEF DESCRIPTION OF THE DRAWINGS

In order to more clearly illustrate the embodiments of this application, a brief introduction to the drawings required in the embodiments will be provided below. It is evident that the drawings described below are merely some of the embodiments of this application. For a person of ordinary skill in the art, without undue effort, other drawings can also be obtained based on these drawings.
FIG. 1 is a flowchart of steps of a method for controlling switchable glass according to an embodiment of the disclosure;
FIG. 2 is a schematic diagram of area division according to an embodiment of the disclosure;
FIG. 3 is a schematic diagram of distance range division according to an embodiment of the disclosure;
FIG. 4 is a schematic diagram of a distance information acquisition process according to an embodiment of the disclosure;
FIG. 5 is a schematic diagram of the distribution of distance levels according to an embodiment of the disclosure;
FIG. 6 is a flowchart of a step of determining a distance level according to an embodiment of the disclosure;
FIG. 7 is a flowchart of a step of sending a control instruction according to an embodiment of the disclosure; and
FIG. 8 is a schematic structural diagram of an apparatus for controlling switchable glass according to an embodiment of the disclosure.

### DETAILED DESCRIPTION OF THE EMBODIMENTS

Below, the technical solutions in the embodiments of this application will be described clearly in conjunction with the drawings in the embodiments. It is evident that the described embodiments are only a part of the embodiments of this application, not all of them. All other embodiments obtained by a person of ordinary skill in the art based on the embodiments in this application are within the scope of protection of this application.

The terms "first", "second", etc., used in the specification and claims of this application are for distinguishing similar objects, not for describing a specific order or sequence. It should be understood that such terms can be interchanged in appropriate circumstances so that the embodiments of this application can be implemented in an order other than those shown or described here. The objects distinguished by "first" and "second" usually belong to a category and do not limit the number of objects. For example, the "first object" can be one or at least two. In addition, "and/or" in the specification and claims indicates at least one of the connected objects, and the character "/" generally indicates that the associated objects before and after are in an "or" relationship.

Switchable glass is an important development direction of automotive glass, and main types of the current switchable glass are as follows: electrochromism, polymeric macromolecular liquid crystals, dye liquid crystals and suspended particles. Exemplarily, electrochromism refers that a voltage is applied to the outsides of electrodes at both ends of an element, and particles move into (or out of) an electrochromic layer under the action of an electric field of the applied voltage, so that the valence of an electrochromic material decreases (or increases), and the color of the electrochromic material changes before equilibrium; and after equilibration, the electrochromic material is stable in color. The polymeric macromolecular liquid crystals refer that a layer of liquid crystal dimming film is additionally arranged between the glass. During the power-on process, a macromolecular liquid crystal material in the liquid crystal film is arranged in an orderly manner, so the glass becomes transparent. On the contrary, it presents a light-permeable and opaque appearance state. Different types of switchable glass have different driving voltages and different reaction speeds. The switchable glass mentioned in the embodiments of the disclosure may be any one of the above-mentioned glass.

**In** related art, vehicle-mounted switchable glass is mainly controlled by corresponding buttons in a cockpit system within a vehicle. The cockpit system sends an electrical signal to the switchable glass through a standard control interface; and meanwhile, the switchable glass may also acquire various sensor data perceived by an intelligent cockpit, thereby achieving the interaction between the cockpit system and the switchable glass. In related art, the user needs to manually control the corresponding buttons in the cockpit system and send a corresponding control signal to the switchable glass, thereby adjusting the light transmittance. This manual adjustment method is not flexible enough, and the user may control the light transmittance of the glass after the user unlocks the vehicle and enters into the vehicle. The user may not adjust the light transmittance of the glass in the process of performing treatments on the exterior of the vehicle.

In view of the problems existing in the related art, the disclosure designs a method for controlling switchable glass. In this method, distance information between a target object and a vehicle is acquired, an input signal of the corresponding switchable glass is generated according to the distance information, and a light transmittance of the switchable glass is automatically adjusted by means of this input signal, so that the light transmittance of the glass is flexibly adjusted without manual control of the user, thereby improving the user experience.

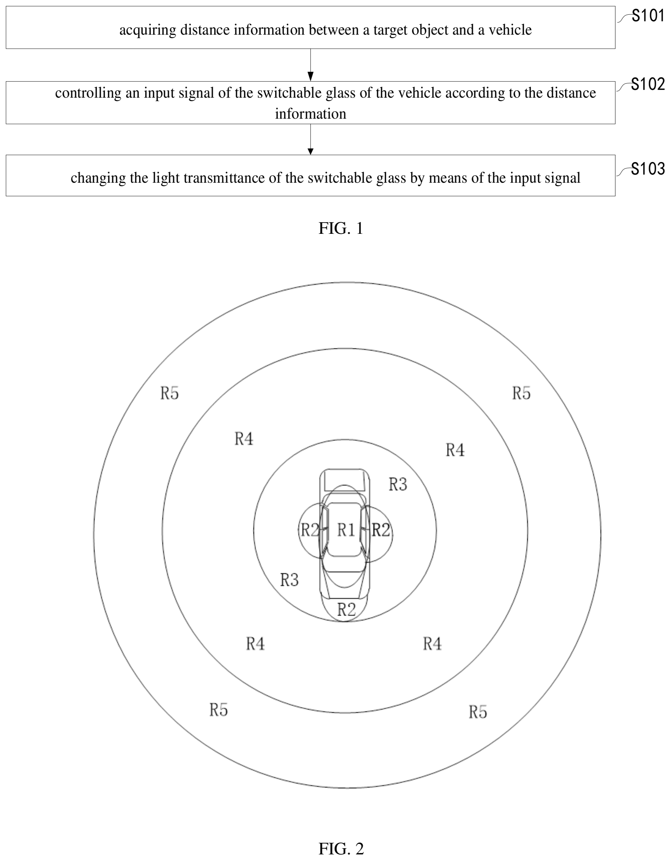

In a first aspect, FIG. 1 is a flowchart of steps of a method for controlling switchable glass according to an embodiment of the disclosure. The method may include the following steps.

At step S101, acquiring distance information between a target object and a vehicle.

The target object may be any object that may be used to assist in detecting the distance information, or a moving object. The distance information represents a proximity of the distance between the target object and the vehicle. During specific implementation, the distance information between the target object and the vehicle may be acquired through the intelligent cockpit system on the vehicle. For example, the position information of the target object and the position information of the vehicle are respectively acquired first, and the distance information between the target object and the vehicle is then determined according to the position information of the target object and the position information of the vehicle. In this embodiment, step S101 may be executed automatically and cyclically without manual triggering of the user. That is, in the case that the distance information may not be acquired when the target object is far enough away from the vehicle, subsequent steps are stopped; and in the case that the target object is close enough to the vehicle, or the target object is within a certain range, the position information of the target object is acquired, and the subsequent steps are automatically executed.

At step S102, controlling an input signal of the switchable glass of the vehicle according to the distance information.

At step S103, changing the light transmittance of the switchable glass by means of the input signal.

During specific implementation, the switchable glass may be used as an integral part of the intelligent cockpit system of the vehicle, and the distance information may be acquired through the intelligent cockpit system. The intelligent cockpit system controls the input signal of the switchable glass of the vehicle according to the distance information, and sends the corresponding input signal to the switchable glass through the standard control interface, so that the switchable glass changes the light transmittance according to the input signal. The input signal may be either a voltage signal or a current signal.

Moreover, as a main intelligent control system of the vehicle, the intelligent cockpit system may acquire multi-directional vehicle information through mounted sensors, which may include: body domain information (a digital key, window lifter switches, door handles, door locks, a tailgate lock, seat adjustment motors, a seat heater, seat ventilation fans, seat adjustment switches, seat belt locks, exterior mirror adjustment motors, exterior mirror folding motors, a wiper switch, lamp switches, a charging port cover switch, etc.); thermal management information (a temperature sensor, a pressure sensor, a sunlight sensor, a PM2.5 sensor, and an electric air outlet switch); power domain information (a charging electronic lock, a P block switch, an AC charging port, a DC charging port, a high-voltage battery control service, a high-voltage battery query service, an MCU control service, an MCU query service, etc.); and chassis domain information (a brake pedal switch sensor, an accelerator pedal travel sensor, and a crash hardwire sensor). During specific implementation, the intelligent cockpit system may control the input signal of the switchable glass by combining the distance information and the vehicle information acquired by itself, thereby achieving the change in a dimming rate.

As can be seen from the above steps, in the embodiments of the disclosure, the change in the distance between the target object and the vehicle may be perceived according to the distance information between the target object and the vehicle, and the input signal of the switchable glass is controlled according to the distance information, such that the light transmittance of the switchable glass is dynamically adjusted, thereby improving the user experience.

### Embodiment 1

This embodiment describes an example in which distance information between a target object and a vehicle is acquired.

The target object may be a digital key of the vehicle; and the acquiring the distance information between the target object and the vehicle includes:
acquiring a distance parameter value of the digital key according to a type of the digital key; and
determining distance information between the digital key and the vehicle according to the distance parameter value.

The digital key refers to a technology of performing digital key binding by taking a mobile phone, a smart wearable device and other terminals as compatible mobile devices and implementing keyless start and control of the vehicle from the compatible mobile device using a precise positioning technology algorithm. At present, digital keys are mainly divided into three categories: Bluetooth low energy (BLE) digital keys, near field communication (NFC) keys, and ultra wide band (UWB) digital keys. Taking the BLE digital key as an example, an owner binds the BLE digital key with a mobile phone as a control terminal, adds a mobile phone number to a digital key management interface, and downloads a corresponding App to create the digital key. When the owner who carries the mobile phone approaches the vehicle, a BLE connection performed between the control terminal and the vehicle achieves the automatic control over the vehicle. In this embodiment, the digital key may represent a mobile device bound with the digital key of the vehicle, a distance parameter value of the digital key represents a distance parameter value of the mobile device, and the distance information between the digital key and the vehicle represents distance information between this mobile device and the vehicle.

During specific implementation, after the vehicle establishes a connection with the digital key, the distance parameter value of the digital key needs to be acquired. In the case that the terminal bound with the digital key is away from the vehicle, the connection between the vehicle and the digital key may not be established, and then the distance parameter value of the digital key may not be acquired, so subsequent steps are stopped; and in the case that the terminal bound with the digital key is close to the vehicle, the connection between the vehicle and the digital key is detected, the vehicle perceives the distance from the digital key, and the distance parameter value of the digital key is automatically acquired. Depending on different types of digital keys, the established connections are different. Specifically, a BLE connection is established between the BLE digital key and the vehicle, and a UWB connection is established between the UWB digital key and the vehicle.

A distance parameter value of the digital key is acquired according to a type of the digital key. During specific implementation, due to different types of digital keys, the methods for positioning or measuring distances from the digital keys are different. In the case that the digital key is a BLE digital key, the vehicle calculates and acquires the distance parameter value of the BLE digital key through a received signal strength indication (RSSI) positioning algorithm of the BLE digital key, and the vehicle may also calculate an angle of the BLE digital key through an Angle of Arrival (AOA) algorithm of the BLE digital key, thereby acquiring the distance parameter value of the BLE digital key. In the case that the digital key is a UWB digital key, the vehicle may calculate and acquire a distance parameter value from the UWB digital key by using a time-of-flight distance-measuring method of the UWB digital key.

The distance information between the digital key and the vehicle is determined according to the distance parameter value. During specific implementation, functional areas may be pre-divided according to functional requirements of the vehicle. Exemplarily, referring to FIG. 2, FIG. 2 shows a schematic diagram of area division. As shown in FIG. 2, an area where the distance between the digital key and the vehicle is greater than 30 m, the digital key needs to perform a function of establishing a connection with the vehicle and completing an authentication; in an area where the distance between the digital key and the vehicle is 8-15 m (as shown in an R5 area in FIG. 2), the digital key needs to perform a function of remotely controlling a courtesy lamp of the vehicle; in an area where the distance between the digital key and the vehicle is 5-8 m (as shown in an R4 area in FIG. 2), the digital key needs to perform a function of locking after leaving the vehicle; in an area where the distance between the digital key and the vehicle is less than 3 m (as shown in an R3 area in FIG. 2), the digital key needs to perform a function of unlocking while approaching the vehicle; in an area where the distance between the digital key and a door of the vehicle is less than 1 m (as shown in an R2 area in FIG. 2), the digital key needs to perform a function of passive entry; and in an area inside the vehicle (as shown in an R1 area in FIG. 2), the digital key needs to perform a function of controlling the start of the vehicle. In another example, the division of areas may be customized by the user. Therefore, the area division may be performed according to the above-mentioned functional requirements, and then the functional area where the digital key is located is determined according to the distance parameter value of the digital key, and used as the distance information between the digital key and the vehicle.

**In** the above Embodiment 1, the method for acquiring the distance information between the target object and the vehicle in the case that the target object is a digital key is described, in which the distance-measuring and positioning functions of the digital key itself are used to quickly and accurately acquire the distance information between the target object and the vehicle.

### Embodiment 2

This embodiment describes an example in which the switchable glass is controlled in the case that the vehicle has keyless entry and starting functions. The method for controlling the switchable glass further includes:
detecting whether a vehicle unlocking operation of the target object is sensed;
prior to sensing the vehicle unlocking operation, keeping the light transmittance of the switchable glass as a first light transmittance;
in the course of sensing the vehicle unlocking operation, adjusting the light transmittance of the switchable glass to a second light transmittance, wherein the second light transmittance is greater than the first light transmittance; and after sensing the vehicle unlocking operation, adjusting the light transmittance of the switchable glass to a third light transmittance in response to detecting that a door of the vehicle is opened, wherein the third light transmittance is less than the second light transmittance; and
after detecting that the door of the vehicle is opened, adjusting the light transmittance of the switchable glass to a fourth light transmittance in response to determining that the vehicle enters a ready-to-drive state, wherein the fourth light transmittance is less than the second light transmittance.

During specific implementation, the vehicle may have keyless entry and start functions. For example, the vehicle may be set to an NFC unlocking mode, or a fingerprint unlocking mode. The NFC unlocking mode means that the user completes unlocking by approaching a device (mobile phone or portable wearable device) with an NFC function to a swipe sensing area of the vehicle body. The fingerprint unlocking mode means that the user collects a fingerprint image in a fingerprint recognition area of the vehicle body, and unlocks the vehicle in response to successful fingerprint recognition.

Whether a vehicle unlocking operation of the target object is sensed is detected. Exemplarily, in the case that the vehicle detects and senses that the target object approaches a device having an NFC function to the swipe sensing area of the vehicle body, and receives the NFC information, or in the case that the vehicle detects and senses that the target object collects a fingerprint image on a fingerprint recognition area of the vehicle body and the fingerprint recognition is successful, it means that the vehicle unlocking operation of the target object is sensed, so as to determine the distance information between the target object and the vehicle. Specifically, the distance information indicates that the target object is located near the swipe sensing area of the vehicle body, or located in the fingerprint recognition area of the vehicle body.

Prior to sensing the vehicle unlocking operation, the light transmittance of the switchable glass is kept at a first light transmittance. In response to the vehicle unlocking operation being not detected, it means that the target object is away from the vehicle and has not yet reached a specified area (near the swipe sensing area of the vehicle body, or the fingerprint recognition area). In this case, the switchable glass may not be transparent, so as to avoid other pedestrians passing by the vehicle from acquiring the internal information of the vehicle, thereby protecting the privacy of the owner. The light transmittance of the switchable glass may be kept at the first light transmittance. Optionally, this first light transmittance may be the lowest light transmittance.

**In** response to the vehicle unlocking operation being sensed, it means that the target object touches an unlocking area or a corresponding button, or the target object is located in the swipe sensing area of the vehicle body or the fingerprint recognition area. The light transmittance of the switchable glass may be adjusted to a second light transmittance, and the second light transmittance is greater than the first light transmittance, so that the target object is located at the current position. In the case that the door is not opened, the internal information of the vehicle may be acquired in advance through the switchable glass. After the vehicle unlocking operation is sensed, in response to detecting that the door of the vehicle is opened, the target object no longer needs to observe the situation in the vehicle through the switchable glass. The light transmittance of the switchable glass may be adjusted to a third light transmittance, wherein the third light transmittance is less than the second light transmittance. In response to detecting that the door of the vehicle is opened, it is determined that the vehicle enters a ready-to-drive state. Correspondingly, it may be determined that the vehicle enters the ready-to-drive state when the target object is located at an area inside the vehicle. In order to avoid pedestrians passing by the vehicle from acquiring the internal information of the vehicle, the light transmittance of the switchable glass is adjusted to a fourth light transmittance, wherein the fourth light transmittance is less than the second light transmittance.

**In** the above Embodiment 3, the method for controlling the switchable glass in the case that the vehicle has keyless entry and starting functions is described. By sensing the vehicle unlocking operation of the target object, it is determined that the target object is located near the swipe sensing area of the vehicle body or in the fingerprint recognition area of the vehicle body in response to sensing the corresponding vehicle unlocking operation. The light transmittance of the switchable glass is adjusted to the second light transmittance, so that the target object may acquire the internal information of the vehicle in advance before unlocking. The light transmittance of the switchable glass may be dynamically adjusted, thereby improving the user experience.

### Embodiment 3

This embodiment describes an example in which distance information between a target object and a vehicle is acquired.

Whether the vehicle is connected to a target network authorized by the target object is detected.

The distance information between the target object and the vehicle is determined according to whether the vehicle is connected to the target network.

During specific implementation, the target object may be a home gateway. In response to detecting that the vehicle is connected to a target network (which may be wifi or Bluetooth) authorized by the home gateway, it means that the vehicle has entered a coverage area of the target network, for example, into a home garage. In this case, in the case that the vehicle is connected to the target network, the distance information between the vehicle and the target object indicates that the vehicle is within the coverage area of the target network; and in the case that the vehicle is not connected to the target network, the distance information between the vehicle and the target object indicates that the vehicle is located outside the coverage area of the target network.

**In** the above Embodiment 4, the method for acquiring the distance information between the target object and the vehicle by detecting whether the vehicle is connected to the target network is described. In the case that the vehicle is connected to the target network, the distance information indicates that the vehicle has entered the coverage area of the target network, so that the distance information between the target object and the vehicle may be acquired quickly and accurately by detecting whether the vehicle is connected to the target network.

### Embodiment 4

This embodiment describes that prior to acquiring the distance information between the target object and the vehicle, the method for controlling the switchable glass further includes:
acquiring data collected for the target object; and
recognizing whether the target object is a driver of the vehicle according to the collected data; and
the acquiring the distance information between the target object and the vehicle includes:
   in the case that the target object is recognized as the driver of the vehicle, acquiring distance sensing data or trajectory data of the driver.

During specific implementation, the vehicle needs to recognize the target object first. Data collected for the target object is acquired; and whether the target object is the driver of the vehicle is recognized according to the collected data. Specifically, the collected data may be image data, so that the vehicle is equipped with a camera that may recognize human face images, and human face information of the vehicle driver is recorded and stored by means of human face authentication. In the actual use process, when the target object walks to an area around the vehicle and enters a field of view range of the camera, images around the vehicle are acquired in real time by the camera, the image containing the target object is determined from these images, and whether the target object is the driver of the vehicle is recognized according to this image. Alternatively, the collected data may be identification data of the digital key, so that whether the target object carrying the digital key is the driver of the vehicle is recognized based on an identifier of the digital key. Alternatively, the collected data may also be feature information of the target object, such as gait, trajectory and voice, so that whether the target object is the driver of the vehicle is recognized according to the feature information.

In the case that the target object is recognized as the driver of the vehicle, the distance sensing data or trajectory data of the driver is acquired. Specifically, after the target object is determined to be the driver, the distance information between the target object and the vehicle is acquired, and the distance information may be the distance sensing data or trajectory data of the driver.

Optionally, the vehicle may sense depth information change of the driver through vehicle-mounted sensors such as a vehicle-mounted camera, radar and laser, calculate the distance sensing data according to the depth information change, and then obtain the distance between the driver and the vehicle. The vehicle may also acquire the trajectory data of the driver through the corresponding sensors, and recognize whether the driver has the intention to unlock the vehicle by sensing a trajectory of the driver. Specifically, according to the movement trajectory of the driver, the driver is determined to be approaching to the vehicle, it is determined that the driver has the intention to unlock the vehicle, and the vehicle changes the light transmittance of the switchable glass by controlling the input signal. According to the movement trajectory of the driver, it is determined that the driver is just passing by the vehicle and has no intention to unlock the vehicle, and then the vehicle does not change the light transmittance of the switchable glass.

**It** is proposed in the above Embodiment 4 that the target object is recognized by acquiring the data collected for the target object. After this target object is successfully determined as the driver of the vehicle based upon recognition, the distance sensing data or trajectory data of the driver is acquired, so as to facilitate the subsequent changes of the switchable glass according to the distance sensing data or trajectory data of the driver, thereby achieving the flexible control over the light transmittance of the switchable glass.

### Embodiment 5

This embodiment describes an example in which the light transmittance of the switchable glass of the vehicle is adjusted according to the distance information.

Prior to acquiring the distance information between the target object and the vehicle, the light transmittance of the switchable glass of the vehicle is kept at an initial light transmittance.

The controlling the input signal of the switchable glass of the vehicle according to the distance information includes:
in the case that the distance information characterizes that the target object is within a first distance range, controlling the input signal of the switchable glass of the vehicle as an input signal of the first light transmittance, wherein the first distance range is a distance range located inside the vehicle;
in the case that the distance information characterizes that the target object is within a second distance range, controlling the input signal of the switchable glass of the vehicle as an input signal of the second light transmittance, wherein the second distance range is a first target distance range located outside the vehicle; and
in the case that the distance information characterizes that the target object is within a third distance range, controlling the input signal of the switchable glass of the vehicle as an input signal of the third light transmittance, wherein the third distance range is a second target distance range located outside the vehicle, and a lower limit value of the second target distance range is greater than an upper limit value of the first target distance range; and
the third light transmittance is less than the first light transmittance and less than the second light transmittance.

During specific implementation, prior to acquiring the distance information between the target object and the vehicle, the light transmittance of the switchable glass of the vehicle is kept at an initial light transmittance. Prior to acquiring the distance information between the target object and the vehicle, in the case that the vehicle is unable to acquire the distance information, it means that the distance between the target object and the vehicle is too far, and the light transmittance of the switchable glass is kept at the initial light transmittance. In general cases, the initial light transmittance is low, which plays a role in protecting the privacy of the owner. In actual applications, the initial light transmittance may be set by the user. Optionally, the initial light transmittance may be the lowest light transmittance.

In response to acquiring the distance information between the corresponding target object and the vehicle, a distance range of the target object in the vehicle may be determined according to the acquired distance information. Depending on different distance ranges of the target object in the vehicle, the light transmittances of the switchable glass are adjusted, respectively.

Case 1: in the case that the distance information characterizes that the target object is within a first distance range, the input signal of the switchable glass of the vehicle is controlled as an input signal of the first light transmittance, wherein the first distance range is a distance range located inside the vehicle. An area inside the vehicle is determined to be the first distance range of the vehicle. In response to determining that the target object is located within the first distance range according to the distance information, the input signal of the switchable glass of the vehicle is controlled as an input signal of the first light transmittance, so that the light transmittance is adjusted to the first light transmittance. Optionally, the first light transmittance is less than the second light transmittance. In this embodiment, after the target object enters into the vehicle according to the distance information, the light transmittance of the switchable glass is reduced appropriately (adjusted to the first light transmittance) to protect the privacy information of the target object in the vehicle, without the need for the user to manually control and adjust after entering the vehicle, thereby achieving the automatic control over the light transmittance and improving the user experience.

Case 2: in the case that the distance information characterizes that the target object is within a second distance range, the input signal of the switchable glass of the vehicle is controlled as an input signal of the second light transmittance, wherein the second distance range is a first target distance range located outside the vehicle. The first target distance range outside the vehicle is determined as the second distance range. For example, an area within a radius of 10 m outside the vehicle is determined as the second distance range. In response to determining that the target object is within the second distance range according to the distance information, the input signal of the switchable glass of the vehicle is controlled as an input signal of the second light transmittance, such that the light transmittance is adjusted to the second light transmittance. The second light transmittance is higher than the first light transmittance and the third light transmittance. In general cases, in the case that the vehicle is turned off or locked, the switchable glass of the vehicle is opaque for the user's privacy. The user needs to open the door and enter into the vehicle if the internal information of the vehicle needs to be acquired. Alternatively, the user needs to select an appropriate light transmittance by controlling a corresponding button in the cockpit system if the transmittance of the window glass needs to be improved. In this embodiment, by acquiring the distance information which represents that the target object is within the second distance range, the light transmittance of the switchable glass is automatically improved to the second light transmittance in this embodiment, such that the target object observes the interior of the vehicle through the glass to acquire the required information, thereby achieving the automatic control over the light transmittance of the switchable glass and improving the user experience.

Case 3: in the case that the distance information characterizes that the target object is within a third distance range, the input signal of the switchable glass of the vehicle is controlled as an input signal of the third light transmittance, the third distance range is the second target distance range located outside the vehicle, and a lower limit value of the second target distance range is greater than an upper limit value of the first target range. The second target distance range outside the vehicle is determined as the third distance range. The lower limit value of the second target distance range is greater than the upper limit value of the first target distance range. Exemplarily, the first target range is an area within a radius range of 10 m outside the vehicle, and the lower limit value of the second target distance range needs to be greater than 10 m. Therefore, the lower limit value of the second target distance range needs to be greater than 10 m, for example, the third distance range may be an area within a radius range of 20-15 m outside the vehicle. In the case that the target object is within the third distance range according to the distance information, the input signal of the switchable glass of the vehicle is controlled as an input signal of the third light transmittance, such that the light transmittance is adjusted to the third light transmittance. The third light transmittance is less than the first light transmittance and less than the second light transmittance. In the case that the target object is away from the vehicle, the light transmittance of the switchable glass of the vehicle may be kept in a relatively low state in order to protect the privacy of the owner.

**In** a possible embodiment, in the case that the target object is the digital key of the vehicle, and the digital key does not establish a communication connection with the vehicle, the light transmittance of the switchable glass of the vehicle is kept at a current light transmittance.

The acquiring the distance information between the target object and the vehicle includes:
in the case that the target object is the digital key of the vehicle, and the digital key establishes a communication connection with the vehicle, acquiring the distance information between the digital key and the vehicle according to the type of the digital key.

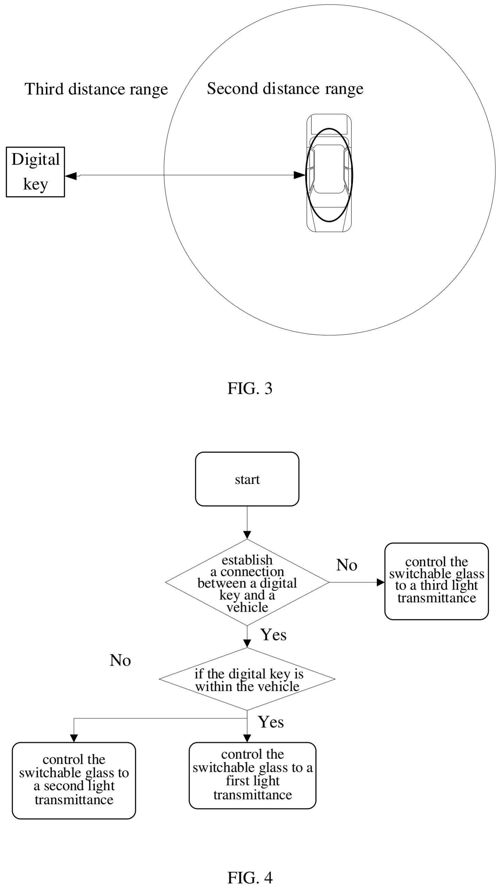

Referring to FIG. 3, FIG. 3 is a schematic diagram of distance range division. As shown in FIG. 3, in the case that the target object is the digital key of the vehicle, a distance range of the vehicle is mainly divided into three parts according to whether the digital key may establish a connection with the vehicle. According to the above embodiment, a distance range outside the vehicle within which the digital key may establish a connection with the vehicle is determined as the second distance range, a distance range outside the vehicle within which the digital key may not establish a connection with the vehicle is determined as the third distance range, and a distance range inside the vehicle within which the digital key establishes a connection with the vehicle is determined as the first distance range.

During specific implementation, referring to FIG. 4, FIG. 4 shows a schematic diagram of a distance information acquisition process. As shown in FIG. 4, on the premise that the vehicle is equipped with a digital key, whether the digital key establishes a connection with the vehicle is determined first. In the case that the digital key does not establish a connection with the vehicle, it is determined that the target object (digital key) is located within the third distance range outside the vehicle. The light transmittance of the vehicle glass does not need to be adjusted in the case that the digital key is away from the vehicle, and the light transmittance of the switchable glass of the vehicle is kept at the current light transmittance (e.g., the third light transmittance).

After the vehicle senses that a connection with the digital key is established, the distance information between the digital key and the vehicle is acquired. The specific method for acquiring the distance information may refer to the content of Embodiment 1. According to the type of the digital key, the distance parameter value of the digital key is acquired, and the distance information between the digital key and the vehicle is determined according to the acquired distance parameter value of the digital key. Referring to FIG. 4, after it is determined that the digital key has established a connection with the vehicle, whether the digital key is located inside the vehicle is further determined according to the acquired distance information. In the case that the digital key is located inside the vehicle, it is determined that the target object is within the first distance range, and the light transmittance of the switchable glass is adjusted to the first light transmittance. In the case that the digital key is not within an area inside the vehicle, it is determined that the target object is within the second distance range, and the light transmittance of the switchable glass is adjusted to the second light transmittance.

### Embodiment 6

This embodiment describes an example of Embodiment 5: in the case that the distance information characterizes that the target object is within the second distance range, the input signal of the switchable glass of the vehicle is controlled as an input signal of the second light transmittance.

In the case that the distance information characterizes that the target object is within the second distance range, a distance level to which the distance information belongs is determined.

The input signal of the switchable glass of the vehicle is controlled according to the distance level to which the distance information belongs: as an input signal that adjusts the light transmittance of the switchable glass step by step to the second light transmittance.

During specific implementation, the second light transmittance may be expressed as a specific value, or as a value range of one light transmittance, or as a multi-level light transmittance for a plurality of distance levels, wherein the light transmittance of each level corresponds to one distance level. Exemplarily, as shown in FIG. 2, the distance levels R5, R4, R3, R2, and R1 correspond to one light transmittance, respectively. In the case that the distance information characterizes that the target object is within the second distance range outside the vehicle, the distance level between the target object and the vehicle may be further determined, such that the corresponding light transmittance may be determined according to the distance level.

The input signal of the switchable glass of the vehicle is controlled according to the distance level to which the distance information belongs: as the input signal that adjusts the light transmittance of the switchable glass step by step to the second light transmittance. In the case that the light transmittance is adjusted, in order to avoid the sudden change of light transmittance affecting the user, the light transmittance may be adjusted step by step by means of the input signal, so that the light transmittance gradually increases according to the levels, and is finally adjusted to the second light transmittance. In this embodiment, by further dividing the distance levels according to the distance information, the light transmittance is adjusted to the corresponding level according to the corresponding distance level, thereby achieving flexible control over the light transmittance. The owner may acquire internal environment information of the vehicle through the switchable glass without entering the vehicle, and determine whether to use the vehicle further based on the acquired information.

### Embodiment 7

This embodiment describes an example in Embodiment 6: the input signal of the switchable glass of the vehicle is controlled according to the distance level to which the distance information belongs: as the input signal that adjusts the light transmittance of the switchable glass step by step to the second light transmittance.

The second distance range includes a plurality of levels at which the distance from the vehicle outside the vehicle gradually decreases: a connection area level, a courtesy area level and an unlocking area level; the plurality of light transmittance levels include a plurality of light transmittances that increase gradually: a light transmittance of a connection area, a light transmittance of a courtesy area and a light transmittance of an unlocking area; and the controlling the input signal of the switchable glass of the vehicle according to the distance level to which the distance information belongs: as the input signal that adjusts the light transmittance of the switchable glass step by step to the second light transmittance, includes:
in the case that the distance information belongs to the connection area level, adjusting the light transmittance of the switchable glass to the light transmittance of the connection area;
in the case that the distance information belongs to the courtesy area level, adjusting the light transmittance of the switchable glass to the light transmittance of the courtesy area; and
in the case that the distance information belongs to the unlocking area level, adjusting the light transmittance of the switchable glass to the light transmittance of the unlocking area.

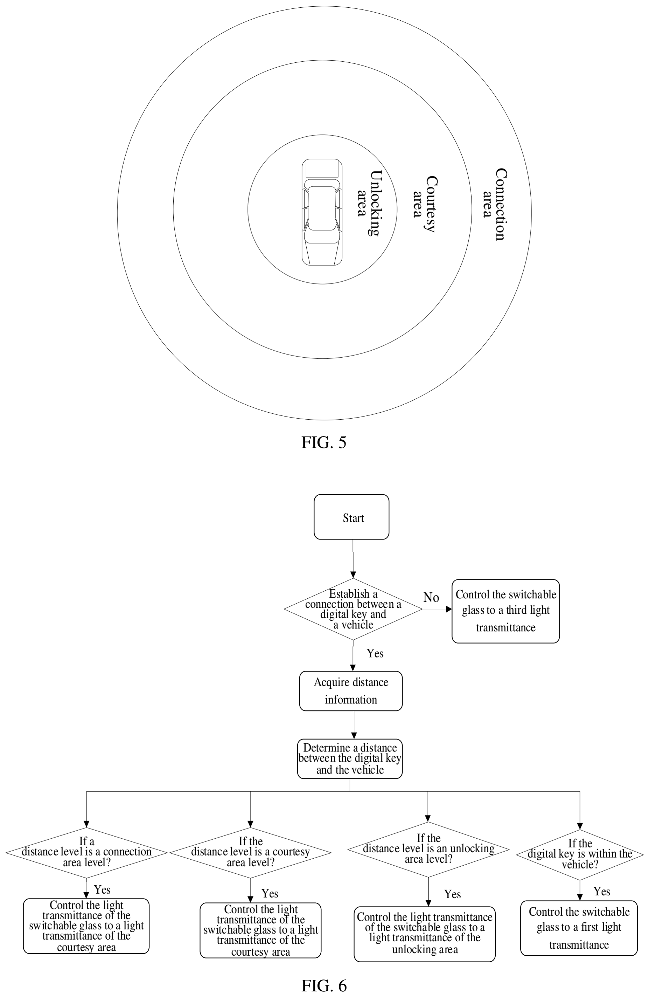

During specific implementation, the second distance range includes a plurality of levels outside the vehicle with gradually decreasing distances from the vehicle: a connection area level, a courtesy area level, and an unlocking area level. Referring to FIG. 5, FIG. 5 shows a schematic diagram of the distribution of distance levels. As shown in FIG. 5, areas around the vehicle are divided into a connection area, a courtesy area, and an unlocking area according to sizes of diameters. Exemplarily, a range of 10-15 m from the vehicle is determined as the connection area, a range of 5-10 m from the vehicle is determined as the courtesy area, and a range of 0-5 m from the vehicle is determined as the unlocking area. The second distance range includes a plurality of levels with gradually decreasing distances from the vehicle: a connection area level, a courtesy area level, and an unlocking area level. Each distance level corresponds to the light transmittance of one level.

Correspondingly, the multi-level light transmittance includes a plurality of light transmittances that gradually increase: a light transmittance of the connection area, a light transmittance of the courtesy area and the light transmittance of the unlocking area. A distance between the connection area and the vehicle is farther than a distance between the courtesy area and the vehicle, so the light transmittance of the connection area is less than or equal to the light transmittance of the courtesy area. A distance between the courtesy area and the vehicle is farther than a distance between the unlocking area and the vehicle, so the light transmittance of the courtesy area is less than that of the unlocking area.

Referring to FIG. 6, FIG. 6 shows a schematic diagram of steps of determining distance levels. As shown in FIG. 6, in the case that the target object is a digital key, whether the digital key establishes a connection with the vehicle is determined first. In the case that the digital key does not establish a connection with the vehicle, it is determined that the target object (digital key) is located within the third distance range outside the vehicle. The light transmittance of the switchable glass of the vehicle is kept at the current light transmittance (e.g., the third light transmittance).

As shown in FIG. 6, after the digital key establishes a connection with the vehicle, the distance between the vehicle and the digital key (target object) is further determined according to the acquired distance information. In the case of determining that the distance level of the target object at the current position is the connection area level according to the distance information, the light transmittance of the switchable glass is adjusted to the light transmittance of the connection area. In the case of determining that the distance level of the target object at the current position is the courtesy area level according to the distance information, the light transmittance of the switchable glass is adjusted from the light transmittance of the connection area to the light transmittance of the courtesy area. In the case of determining that the distance level of the target object at the current position is the unlocking area level according to the distance information, the light transmittance of the switchable glass is adjusted from the light transmittance of the courtesy area to the light transmittance of the unlocking area. The closer the target object is to the vehicle, the higher the light transmittance that needs to be adjusted, and the light transmittance is increased step by step, so that the target object may acquire the internal information of the vehicle.

In a possible embodiment, the method further includes:
prior to acquiring the distance information between the target object and the vehicle, keeping the light transmittance of the switchable glass of the vehicle at an initial light transmittance.

The method further includes:
in the case that the door of the vehicle is opened, adjusting the light transmittance of the switchable glass to an initial light transmittance; and/or
in the case that the door of the vehicle is opened, sending a closing instruction to an atmosphere lamp and/or a courtesy lamp of the vehicle.

During specific implementation, prior to acquiring the distance information between the target object and the vehicle, the light transmittance of the switchable glass of the vehicle is kept at an initial light transmittance. Prior to acquiring the distance information between the target object and the vehicle, in the case that the vehicle is unable to acquire the distance information, it means that the distance between the target object and the vehicle is too far, and the light transmittance of the switchable glass is kept at the initial light transmittance. In general cases, the initial light transmittance is low, which plays a role in protecting the privacy of the owner. In actual applications, the initial light transmittance may be set by the user. Optionally, the initial light transmittance may be the lowest light transmittance.

In the case that the door of the vehicle is opened, the light transmittance of the switchable glass is automatically adjusted to the initial light transmittance. In the case that the door is opened, the target object may directly observe the interior of the vehicle without the need for using the switchable glass, such that the light transmittance of the switchable glass may be automatically adjusted to the initial light transmittance. Moreover, in the case that the vehicle is located outdoors, the glass may be switched to a shading state based on privacy protection settings, or switched to a corresponding light-permeable/semi-light-permeable/shading state based on owner's settings. In this embodiment, in response to detecting that the door is opened, a closing instruction may also be automatically sent to the atmosphere lamp and/or the courtesy lamp of the vehicle, such that the atmosphere lamp and/or the courtesy lamp are/is turned off.

In a possible embodiment, the method further includes:
detecting whether the vehicle is connected to a target network authorized by the target object; and
in response to detecting that the vehicle is connected to the target network, adjusting the switchable glass to a fully transparent state.

During specific implementation, whether the vehicle is connected to a target network authorized by the target object may also be detected. The target object may be a home gateway. In the case that the vehicle is connected to the target network authorized by the home gateway, it means that the vehicle has entered a coverage area of the target network, for example, into a garage area within a house. Since the garage area is a private area, there is no need for shading settings, and the switchable glass may be adjusted to a fully transparent state, which is convenient for the user to observe a situation in the vehicle.

In this embodiment, whether the vehicle is located in a specific environment (e.g., a home environment) may be determined by detecting whether the vehicle is connected to the target network. In general cases, the vehicle may turn on corresponding functions (such as courtesy, engine start, seat heating, and unlocking) in the case that a smart key approaches the vehicle. However, the vehicle is mobile and may be in different environments at different times, and the requirements for no-inductive operations of the vehicle in different environments are different. For example, in the home environment, the target object (e.g., the digital key) is located at home, a distance from the vehicle may be within an effective connection range. In this case, the target object may trigger the vehicle to perform operations such as courtesy and unlocking. In the case that the vehicle is in a company or other environment, the target object (e.g., the digital key) is at a large distance from the vehicle. The target object is generally not located within the effective connection area of the vehicle and will not trigger operations such as courtesy and unlocking. It is proposed in this embodiment that whether the vehicle is in a specific environment (e.g., a home environment) may be determined by detecting whether the vehicle is connected to the target network. In the case that the vehicle is in a specific environment, the switchable glass is directly adjusted to the fully transparent state. Further, a rule of no-inductive operation for the vehicle may be controlled to avoid that the distance between the target object and the vehicle is always within the effective connection range in the case that the vehicle is located in the home environment. The vehicle continuously turns on the corresponding functions (e.g., courtesy, engine start, seat heating, and unlocking), so that the non-inductive operation for the vehicle is closer to the requirements for the specific environment, thereby improving the user experience.

In a possible embodiment, the method further includes:
in the case that a frequency of the distance information triggering the light transmittance adjustment is greater than a target threshold, keeping the light transmittance of the switchable glass of the vehicle at the current light transmittance.

During specific implementation, in order to avoid frequent adjustment of light transmittance and reduce power consumption, the frequency of light transmittance adjustment may be detected in the case that the distance detection is rapidly adjusted due to the sensing accuracy, or the distance information is frequently changed due to the frequent change in the position of the target object. In the case that the frequency of light transmittance adjustment is greater than a target threshold, it means that the light transmittance of the vehicle is adjusted too frequently. In this case, the light transmittance of the switchable glass of the vehicle may be kept at the current light transmittance, so that the light transmittance is fixed, thereby reducing the power consumption caused by frequent adjustment of the light transmittance.

In a possible embodiment, the adjusting the light transmittance of the switchable glass of the vehicle according to the distance information includes:
adjusting a light transmittance of one surface or one side of the switchable glass among a plurality of switchable glass of the vehicle, which is closest to the target object, according to the distance information.

The glass mounted on the vehicle has a plurality of orientations, including front and rear windshields, a sunroof, side windows and a sun visor. In the course of adjusting the light transmittance of the switchable glass according to the distance information, all the switchable glass of the vehicle may be adjusted, or the switchable glass on one or more surfaces may also be adjusted. In this embodiment, the light transmittance of the switchable glass on one surface or one side closest to the target object may be determined according to the distance information. Exemplarily, in the case that the target object is located on the left side of the vehicle, the light transmittances of the two pieces of window glasses on the left side of the vehicle may be increased according to the distance information, so that the target object may observe the situation inside the vehicle through the two pieces of window glass, and the light transmittance of the switchable glass is flexibly adjusted.

In a possible embodiment, the acquiring the distance information between the target object and the vehicle includes:
in the coexistence of a plurality of target objects, acquiring distance information between the vehicle and the target object with the highest priority among the plurality of target objects.

During specific implementation, there may be a plurality of target objects at the same time. Exemplarily, in the case that the target object is the digital key, there may be a plurality of users who each carry the digital key of the vehicle. In this case, the priority of each target object may be determined first, the target object with the highest priority may be taken as an effective target object, the distance information between the target object and the vehicle may be acquired, and then the light transmittance of the switchable glass of the vehicle may be adjusted according to the distance information.

In a possible embodiment, the method further includes:
sending a control instruction to the atmosphere lamp and/or the courtesy lamp of the vehicle according to the distance information.

During specific implementation, a control command may also be sent to the atmosphere lamp and/or courtesy lamp of the vehicle according to the distance information so as to control the atmosphere lamp and/or courtesy lamp to be turned on and/or off.

The atmosphere lamp is an interior light which is installed inside the vehicle and used to set off an atmosphere of an internal environment of the cockpit is usually found in a door panel, a roof, a cup holder, a central console, a courtesy pedal, a trunk, etc. With the development of technologies, the presentation form of the atmosphere lamp is also more personalized and diversified, including monochrome, multi-color, breathing rhythm, music rhythm and other forms, or the atmosphere lamp may also be controlled by means of APP, voice, gestures, etc., or automatically adjusted according to different emotions of passengers. In addition, the state (e.g., vehicle fault information) of the vehicle may also be displayed through the atmosphere lamp. The courtesy lamp refers to a door bottom lamp under the door of the vehicle. In general cases, the courtesy lamp will be instantly turned on in response to pulling the door open to illuminate the ground and also illuminate a road in front of the door for passengers; and the courtesy lamp will be turned off instantly after the door is closed.

During specific implementation, the intelligent cockpit system of the vehicle may be used to acquire the distance information. The intelligent cockpit system sends a corresponding control instruction to the atmosphere lamp and/or courtesy lamp through a standard control interface, so that the atmosphere lamp and/or courtesy lamp are/is turned on or off according to the control instruction.

In general cases, the courtesy lamp needs to be turned on automatically in response to sensing the door to be opened; and the atmosphere lamp needs to be manually turned on by the user through a corresponding button of the cockpit within the vehicle. In this embodiment of the disclosure, a proximity of the distance between the target object and the vehicle may be known according to the acquired distance information between the target object and the vehicle, such that the atmosphere lamp and/or courtesy lamp may be turned on or off automatically according to the proximity of the distance therebetween, without the need for turning on the atmosphere lamp by the user. Alternatively, the atmosphere lamp may be turned on in advance before the door is opened, thereby improving the user experience.

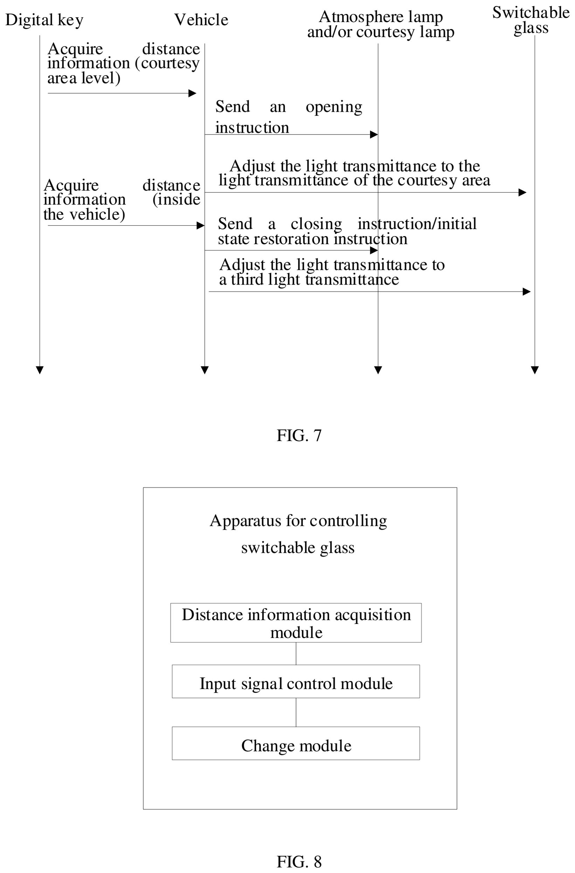

In a possible embodiment, referring to FIG. 7, FIG. 7 shows a flowchart of a step of sending a control instruction. As shown in FIG. 7, the sending the control instruction to the atmosphere lamp and/or the courtesy lamp of the vehicle according to the distance information includes:
in the case that the distance information belongs to the courtesy area level, sending an opening instruction to the atmosphere lamp and/or the courtesy lamp of the vehicle. During specific implementation, in the process of the target object approaching the vehicle, the distance information between the target object and the vehicle is acquired. As shown in FIG. 7, in the case of determining that the target object is located within the courtesy area according to the distance information, the intelligent cockpit system of the vehicle sends the opening instruction to the atmosphere lamp and/or courtesy lamp of the vehicle, thereby illuminating a road in front of the door for the target object. In an application scenario of a parking lot, the atmosphere lamp and/or courtesy lamp may be turned on in advance, which is convenient for the user to quickly find the target vehicle. An input signal may be sent to the switchable glass at the same time, so as to control the switchable glass to adjust the light transmittance to the light transmittance of the courtesy area.

In the case that the distance information characterizes that the target object is located inside the vehicle, a closing instruction is sent to the atmosphere lamp and/or the courtesy lamp of the vehicle. Alternatively,
in the case that the distance information characterizes that the target object is located inside the vehicle, an initial state restoration instruction is sent to the atmosphere lamp and/or the courtesy lamp of the vehicle.

During specific implementation, as shown in FIG. 7, in response to determining that the target object is located inside the vehicle according to the distance information, a closing instruction is sent to the atmosphere lamp and/or the courtesy lamp of the vehicle, such that the atmosphere lamp and/or courtesy lamp is automatically turned off. After the target object enters into the vehicle, there is no need for the atmosphere lamp and/or courtesy lamp to illuminate the exterior and interior of the vehicle, and a closing instruction may be automatically sent according to the distance information of the target object, such that the atmosphere lamp and/or courtesy lamp is turned off. Alternatively, in response to determining that the target object is located inside the vehicle according to the distance information, an initial state instruction may also be sent to the atmosphere lamp and/or courtesy lamp, such that the atmosphere lamp and/or courtesy lamp returns to an initial state. Alternatively, an input signal may also be sent to the switchable glass at the same time so as to control the switchable glass to adjust the light transmittance to the third light transmittance.

Further, a plurality of areas with different distance levels such as the courtesy area and the unlocking area may be set in different radius areas around the vehicle, the user walks into different areas, and the vehicle may determine the user's intention to use the vehicle and perform operations such as courtesy and unlocking. For example, as the user approaches to the vehicle and the user enters the courtesy area, the vehicle may recognize the user and automatically turns on the courtesy lamp. The vehicle is automatically unlocked as the user enters the unlocking area, and then a seat is adjusted to a user's preferred position. In addition, it is also possible to determine whether the target object is within the vehicle by means of a pressure sensor mounted on the seat. In the case that the user is within the vehicle, the atmosphere lamp may be controlled by means of APP, voice, gestures, etc., or automatically adjusted according to different emotions of the target object.

In a possible embodiment, the sending the opening instruction to the atmosphere lamp and/or the courtesy lamp of the vehicle includes:
acquiring ambient light brightness information;
in the case that the ambient light brightness is higher than a preset brightness threshold, sending a flashing opening instruction to the courtesy lamp of the vehicle; and
in the case that the ambient light brightness is lower than the preset brightness threshold, sending a normally-bright opening instruction to the courtesy lamp of the vehicle.

During specific implementation, ambient light brightness information may be acquired through a sensor corresponding to the intelligent cockpit system of the vehicle, and whether the current ambient light brightness is lower than a preset brightness threshold based on the ambient light brightness information. In the case that the ambient light brightness is higher than the preset brightness threshold (e.g., outdoors during the day), it means that the current environment is bright enough and the lighting effect of the courtesy lamp is not obvious enough. Therefore, a flashing opening instruction may be sent to the courtesy lamp of the vehicle to keep it flashing. In the case that the ambient light brightness is lower than the preset brightness threshold (e.g., outdoors during the night), it means that the current environment is relatively dark, and a normally-bright opening instruction is sent to the courtesy lamp of the vehicle, such that the courtesy lamp is kept in a normally-bright state, thereby ensuring the lighting effect.

In a second aspect, an embodiment of the disclosure provides an apparatus for controlling switchable glass. Referring to FIG. 8, FIG. 8 shows a schematic structural diagram of an apparatus for controlling switchable glass. As shown in FIG. 8, the apparatus includes:
a distance information acquisition module, configured to acquire distance information between a target object and a vehicle;
an input signal control module, configured to control an input signal of the switchable glass of the vehicle according to the distance information; and
a change module, configured to change a light transmittance of the switchable glass by means of the input signal.

In a possible embodiment, the distance information acquisition module includes:
a distance parameter value acquisition submodule, configured to acquire a distance parameter value of the digital key according to a type of the digital key; and
a first determining submodule, configured to determine distance information between the digital key and the vehicle according to the distance parameter value.

In a possible embodiment, the apparatus further includes:
a data acquisition module, configured to acquire data collected for the target object; and
a recognition module, configured to recognize whether the target object is a driver of the vehicle according to the collected data.

The distance information acquisition module includes:
a distance sensing data acquisition submodule, configured to, in the case that the target object is recognized as the driver of the vehicle, acquire distance sensing data or trajectory data of the driver.

In a possible embodiment, the apparatus further includes:
a vehicle unlocking detecting module, configured to detect whether a vehicle unlocking operation of the target object is sensed;
a first light transmittance keeping module, configured to, prior to sensing the vehicle unlocking operation, keep the light transmittance of the switchable glass at a first light transmittance;
a first adjusting module, configured to, in response to sensing the vehicle unlocking operation, adjust the light transmittance of the switchable glass to a second light transmittance, wherein the second light transmittance is greater than the first light transmittance; and after sensing the vehicle unlocking operation, adjust the light transmittance of the switchable glass to a third light transmittance in response to detecting that a door of the vehicle is opened, wherein the third light transmittance is less than the second light transmittance; and
a second adjusting module, configured to, after detecting that the door of the vehicle is opened, adjust the light transmittance of the switchable glass to a fourth light transmittance in response to determining that the vehicle enters a ready-to-drive state, wherein the fourth light transmittance is less than the second light transmittance.

In a possible embodiment, the distance information acquisition module includes:
a network connection detecting submodule, configured to detect whether the vehicle is connected to a target network authorized by the target object; and
a second determining submodule, configured to determine the distance information between the target object and the vehicle according to whether the vehicle is connected to the target network.

In a possible embodiment, the apparatus further includes:
an initial light transmittance keeping module, configured to, prior to acquiring the distance information between the target object and the vehicle, keep the light transmittance of the switchable glass of the vehicle at an initial light transmittance.

The input signal control module includes:
a first control submodule, configured to, in the case that the distance information characterizes that the target object is within a first distance range, control the input signal of the switchable glass of the vehicle as an input signal of the first light transmittance, wherein the first distance range is a distance range located inside the vehicle;
a second control submodule, configured to, in the case that the distance information characterizes that the target object is within a second distance range, control the input signal of the switchable glass of the vehicle as an input signal of the second light transmittance, wherein the second distance range is a first target distance range located outside the vehicle; and
a third control submodule, configured to, in the case that the distance information characterizes that the target object is within a third distance range, control the input signal of the switchable glass of the vehicle as an input signal of the third light transmittance, wherein the third distance range is a second target distance range located outside the vehicle, and a lower limit value of the second target distance range is greater than an upper limit value of the first target distance range; and
the third light transmittance is less than the first light transmittance and less than the second light transmittance.

In a possible embodiment, the apparatus further includes:
a light transmittance keeping module, configured to, in the case that the target object is the digital key of the vehicle, and the digital key does not establish a communication connection with the vehicle, keep the light transmittance of the switchable glass of the vehicle at a current light transmittance.

The distance information acquisition module includes:
an acquisition submodule, configured to, in the case that the target object is the digital key of the vehicle, and the digital key establishes a communication connection with the vehicle, acquire the distance information between the digital key and the vehicle according to a type of the digital key.

In a possible embodiment, in the case that the distance information characterizes that the target object is within the second distance range, the second control submodule includes:
a distance level determining unit, configured to, in the case that the distance information characterizes that the target object is within the second distance range, determine a distance level to which the distance information belongs; and
a step-by-step adjusting unit, configured to control the input signal of the switchable glass of the vehicle according to the distance level to which the distance information belongs: as an input signal that adjusts the light transmittance of the switchable glass step by step to the second light transmittance.

In a possible embodiment, the second distance range includes a plurality of levels at which the distance from the vehicle outside the vehicle gradually decreases: a connection area level, a courtesy area level and an unlocking area level; the plurality of light transmittance levels include a plurality of light transmittances that increase gradually: a light transmittance of a connection area, a light transmittance of a courtesy area and a light transmittance of an unlocking area. The step-by-step adjusting unit includes:
a first adjusting subunit, configured to, in the case that the distance information belongs to the connection area level, adjust the light transmittance of the switchable glass to the light transmittance of the connection area;
a second adjusting subunit, configured to, in the case that the distance information belongs to the welcome area level, adjust the light transmittance of the switchable glass to the light transmittance of the courtesy area; and
a third adjusting subunit, configured to, in the case that the distance information belongs to the unlocking area level, adjust the light transmittance of the switchable glass to the light transmittance of the unlocking area.

In a possible embodiment, the apparatus further includes:
a keeping module, configured to, prior to acquiring the distance information between the target object and the vehicle, keep the light transmittance of the switchable glass of the vehicle at an initial light transmittance;
an initial restoration module, configured to, in the case that the door of the vehicle is opened, adjust the light transmittance of the switchable glass to the initial light transmittance; and/or
a closing module, configured to, in the case that the door of the vehicle is opened, send a closing instruction to an atmosphere lamp and/or a courtesy lamp.

In a possible embodiment, the apparatus further includes:
a target network monitoring module, configured to detect whether the vehicle is connected to a target network authorized by the target object; and
a fully transparent state adjusting module, configured to, in response to detecting that the vehicle is connected to the target network, adjust the switchable glass to a fully transparent state.

In a possible embodiment, the apparatus further includes:
a keeping module, configured to, in the case that a frequency of the distance information triggering the light transmittance adjustment is greater than a target threshold, keep the light transmittance of the switchable glass of the vehicle at the current light transmittance.

In a possible embodiment, the adjusting module includes:
a selection adjusting module, configured to adjust a light transmittance of the switchable glass on one surface or one side among a plurality of switchable glass of the vehicle, which is closest to the target object, according to the distance information.

In a possible embodiment, the distance information acquisition module includes:
a priority acquisition module, configured to, in the coexistence of a plurality of target objects, acquire distance information between the vehicle and the target object with the highest priority among the plurality of target objects.

In a possible embodiment, the apparatus further includes:
a control module, configured to send a control instruction to the atmosphere lamp and/or the courtesy lamp of the vehicle according to the distance information.

In a possible embodiment, the control module includes:
a first control submodule, configured to, in the case that the distance information belongs to the courtesy area level, send an opening instruction to the atmosphere lamp and/or the courtesy lamp of the vehicle;
a second control submodule, configured to, in the case that the distance information characterizes that the target object is located inside the vehicle, send a closing instruction to the atmosphere lamp and/or the courtesy lamp of the vehicle; or
a third control submodule, configured to, in the case that the distance information characterizes that the target object is located inside the vehicle, send an initial state restoration instruction to the atmosphere lamp and/or the courtesy lamp of the vehicle.

In a possible embodiment, the first control submodule includes:
a brightness information acquisition unit, configured to acquire ambient light brightness information;
a flashing control unit, configured to, in the case that the ambient light brightness is higher than a preset brightness threshold, send a flashing opening instruction to the courtesy lamp of the vehicle; and
a normally-bright control unit, configured to, in the case that the ambient light brightness is lower than the preset brightness threshold, send a normally-bright opening instruction to the courtesy lamp of the vehicle.

The apparatus for adjusting the light transmittance of the glass provided by the embodiment of the disclosure may implement various processes in the method embodiment for controlling the switchable glass in the first aspect and achieve the same technical effects, which will not be repeated here in order to avoid repetition.

An embodiment of the disclosure further provides a vehicle. The vehicle includes an intelligent cockpit system. The intelligent cockpit system is configured to implement various processes in any embodiment of the method for controlling the switchable glass in the first aspect and achieve the same technical effect, which will not be repeated here in order to avoid repetition.

An embodiment of the disclosure further provides an electronic device, including a processor and a memory. The memory may be configured to have programs or instructions stored thereon which run on the processor; and the programs or instructions, when executed by the processor, implement various processes in the method embodiment for controlling the switchable glass and achieve the same technical effect, which will not be repeated here in order to avoid repetition.

An embodiment of the disclosure further provides a readable storage medium, which is configured to have programs/instructions stored thereon. The programs/instructions, when executed by a processor, implement various processes in the method embodiment for controlling the switchable glass and achieve the same technical effect, which will not be repeated here in order to avoid repetition.

The processor may be a processor in a terminal device described in the preceding embodiment. The readable storage medium includes a computer-readable storage medium, such as a computer read-only memory (ROM), a random access memory (RAM), a magnetic disk or an optical disc, etc.

An embodiment of the disclosure further provides a chip, including a processor and a communication interface. The communication interface is coupled to the processor. The processor is configured to run programs or instructions to implement various processes in the method embodiment for controlling the switchable glass and achieve the same technical effect, which will not be repeated here in order to avoid repetition.

It should be understood that the chip mentioned in the embodiments of the disclosure may also be referred to as a system-level chip, a system chip, a chip system or a system-on-chip, etc.

An embodiment of the disclosure further provides a computer program/program product. The computer program/program product is stored in a storage medium. The computer program/program product is executed by at least one processor to implement various processes of the method embodiment of for controlling the switchable glass and may achieve the same technical effect, which will not be repeated here in order to avoid repetition.

It should be noted that in this specification, the terms "including/comprising", "containing", or any other variation thereof are intended to encompass non-exclusive inclusion, such that a process, method, article, or apparatus that includes a series of elements not only includes those elements, but also includes other elements not explicitly listed, or also includes elements inherent to such process, method, article, or apparatus. Without further limitations, the element limited by the statement "including one..." does not exclude the existence of other identical elements in the process, method, article, or device that includes that element. In addition, it should be pointed out that the scope of the methods and devices in the embodiments of the present application is not limited to performing functions in the order shown or discussed, and may also include performing functions in a substantially simultaneous manner or in the opposite order according to the functions involved. For example, the described methods may be performed in a different order than described, and various steps may be added, omitted, or combined. Additionally, the features described with reference to certain examples can be combined in other examples.

Through the description of the above implementation methods, persons skilled in the art can clearly understand that the above implementation methods can be implemented through software and necessary general hardware platforms. Of course, they can also be implemented through hardware, but in many cases, the former is the better implementation method. Based on this understanding, the technical solution of the present application can essentially or contribute to the existing technology in the form of a computer software product, which is stored in a storage medium (such as ROM/RAM, magnetic disk, optical disk) and includes several instructions to enable a terminal (which can be a mobile phone, computer, server, air conditioner, or network device, etc.) to perform the methods described in various embodiments of the present application.

The embodiments of the present application have been described above in conjunction with the accompanying drawings, but the present application is not limited to the specific embodiments described above. The specific embodiments described above are only illustrative and not restrictive. Persons skilled in the art can also make many forms within the scope of protection of the present application without departing from the purpose and claims of the present application.

## Claims

1. A method for controlling switchable glass, applied to a vehicle, **characterized in that** the method comprises:
acquiring distance information between a target object and a vehicle;
controlling an input signal of the switchable glass of the vehicle according to the distance information; and
changing a light transmittance of the switchable glass by means of the input signal.

2. The method for controlling the switchable glass according to claim 1, **characterized in that** the target object is a digital key of the vehicle; and the acquiring the distance information between the target object and the vehicle comprises:
acquiring a distance parameter value of the digital key according to a type of the digital key; and
determining distance information between the digital key and the vehicle according to the distance parameter value.

3. The method for controlling the switchable glass according to claim 1, **characterized in that**, before acquiring the distance information between the target object and the vehicle, the method further comprises:
acquiring data collected for the target object; and
recognizing whether the target object is a driver of the vehicle according to the collected data; and
the acquiring distance information between a target object and a vehicle comprising:
in the case that the target object is recognized as the driver of the vehicle, acquiring distance sensing data or trajectory data of the driver.

4. The method for controlling the switchable glass according to claim 1, further comprising:
detecting whether a vehicle unlocking operation of the target object is sensed;
prior to sensing the vehicle unlocking operation, keeping the light transmittance of the switchable glass as a first light transmittance;
in the course of sensing the vehicle unlocking operation, adjusting the light transmittance of the switchable glass to a second light transmittance, wherein the second light transmittance is greater than the first light transmittance; and after sensing the vehicle unlocking operation, adjusting the light transmittance of the switchable glass to a third light transmittance in response to detecting that a door of the vehicle is opened, wherein the third light transmittance is less than the second light transmittance; and
after detecting that the door of the vehicle is opened, adjusting the light transmittance of the switchable glass to a fourth light transmittance in response to determining that the vehicle enters a ready-to-drive state, wherein the fourth light transmittance is less than the second light transmittance.

5. The method for controlling the switchable glass according to claim 1, **characterized in that** the acquiring the distance information between the target object and the vehicle comprises:
detecting whether the vehicle is connected to a target network authorized by the target object; and
determining the distance information between the target object and the vehicle according to whether the vehicle is connected to the target network.

6. The method for controlling the switchable glass according to claim 1, further comprising:
prior to acquiring the distance information between the target object and the vehicle, keeping the light transmittance of the switchable glass of the vehicle at an initial light transmittance; and
the controlling an input signal of the switchable glass of the vehicle according to the distance information comprises:
in the case that the distance information characterizes that the target object is within a first distance range, controlling the input signal of the switchable glass of the vehicle as an input signal of the first light transmittance, wherein the first distance range is a distance range located inside the vehicle;
in the case that the distance information characterizes that the target object is within a second distance range, controlling the input signal of the switchable glass of the vehicle as an input signal of the second light transmittance, wherein the second distance range is a first target distance range located outside the vehicle; and
in the case that the distance information characterizes that the target object is within a third distance range, controlling the input signal of the switchable glass of the vehicle as an input signal of the third light transmittance, wherein the third distance range is a second target distance range located outside the vehicle, and a lower limit value of the second target distance range is greater than an upper limit value of the first target distance range; and
the third light transmittance is less than the first light transmittance and less than the second light transmittance.

7. The method for controlling the switchable glass according to claim 6, further comprising:
in the case that the target object is the digital key of the vehicle, and the digital key does not establish a communication connection with the vehicle, keeping the light transmittance of the switchable glass of the vehicle at a current light transmittance; and
the acquiring distance information between a target object and a vehicle comprises:
in the case that the target object is the digital key of the vehicle, and the digital key establishes a communication connection with the vehicle, acquiring the distance information between the digital key and the vehicle according to a type of the digital key.

8. The method for controlling the switchable glass according to claim 6, **characterized in that** in the case that the distance information characterizes that the target object is within the second distance range, the controlling the input signal of the switchable glass of the vehicle as an input signal of the second light transmittance comprises:
in the case that the distance information characterizes that the target object is within the second distance range, determining a distance level to which the distance information belongs; and
controlling the input signal of the switchable glass of the vehicle according to the distance level to which the distance information belongs: as an input signal that adjusts the light transmittance of the switchable glass step by step to the second light transmittance.

9. The method for controlling the switchable glass according to claim 8, **characterized in that** the second distance range comprises a plurality of levels at which the distance from the vehicle outside the vehicle gradually decreases: a connection area level, a courtesy area level and an unlocking area level; the plurality of light transmittance levels comprise a plurality of light transmittances that increase gradually: a light transmittance of a connection area, a light transmittance of a courtesy area and a light transmittance of an unlocking area; and the controlling the input signal of the switchable glass of the vehicle according to the distance level to which the distance information belongs: as the input signal that adjusts the light transmittance of the switchable glass step by step to the second light transmittance, comprises:
in the case that the distance information belongs to the connection area level, adjusting the light transmittance of the switchable glass to the light transmittance of the connection area;
in the case that the distance information belongs to the courtesy area level, adjusting the light transmittance of the switchable glass to the light transmittance of the courtesy area; and
in the case that the distance information belongs to the unlocking area level, adjusting the light transmittance of the switchable glass to the light transmittance of the unlocking area.

10. The method for controlling the switchable glass according to claim 1, further comprising:
prior to acquiring the distance information between the target object and the vehicle, keeping the light transmittance of the switchable glass of the vehicle at an initial light transmittance; and
the method further comprising:
in the case that the door of the vehicle is opened, adjusting the light transmittance of the switchable glass to the initial light transmittance; and/or
in the case that the door of the vehicle is opened, sending a closing instruction to an atmosphere lamp and/or a courtesy lamp of the vehicle.

11. The method for controlling the switchable glass according to claim 1, further comprising:
detecting whether the vehicle is connected to a target network authorized by the target object; and
in response to detecting that the vehicle is connected to the target network, adjusting the switchable glass to a fully transparent state.

12. The method for controlling the switchable glass according to claim 1, further comprising:
in the case that a frequency of the distance information triggering the light transmittance adjustment is greater than a target threshold, keeping the light transmittance of the switchable glass of the vehicle at the current light transmittance.

13. The method for controlling the switchable glass according to claim 1, **characterized in that** the adjusting the light transmittance of the switchable glass of the vehicle according to the distance information comprises:
adjusting a light transmittance of the switchable glass on one surface or one side among a plurality of switchable glass of the vehicle, which is closest to the target object, according to the distance information.

14. The method for controlling the switchable glass according to claim 1, **characterized in that** the acquiring the distance information between the target object and the vehicle comprises:
in the coexistence of a plurality of target objects, acquiring distance information between the vehicle and the target object with the highest priority among the plurality of target objects.

15. The method for controlling the switchable glass according to claim 1, further comprising:
sending a control instruction to the atmosphere lamp and/or the courtesy lamp of the vehicle according to the distance information.

16. The method for controlling the switchable glass according to claim 15, **characterized in that** the sending a control instruction to the atmosphere lamp and/or the courtesy lamp of the vehicle according to the distance information comprises:
in the case that the distance information belongs to the courtesy area level, sending an opening instruction to the atmosphere lamp and/or the courtesy lamp of the vehicle;
in the case that the distance information characterizes that the target object is located inside the vehicle, sending a closing instruction to the atmosphere lamp and/or the courtesy lamp of the vehicle; or
in the case that the distance information characterizes that the target object is located inside the vehicle, sending an initial state restoration instruction to the atmosphere lamp and/or the courtesy lamp of the vehicle.

17. The method for controlling the switchable glass according to claim 16, **characterized in that** the sending an opening instruction to the atmosphere lamp and/or the courtesy lamp of the vehicle comprises:
acquiring ambient light brightness information;
in the case that the ambient light brightness is higher than a preset brightness threshold, sending a flashing opening instruction to the courtesy lamp of the vehicle; and
in the case that the ambient light brightness is lower than the preset brightness threshold, sending a normally-bright opening instruction to the courtesy lamp of the vehicle.

18. An apparatus for controlling switchable glass, comprising:
a distance information acquisition module, configured to acquire distance information between a target object and a vehicle;
an input signal control module, configured to control an input signal of the switchable glass of the vehicle according to the distance information; and
a change module, configured to change a light transmittance of the switchable glass by means of the input signal.

19. A vehicle, comprising an intelligent cockpit system, **characterized in that** the intelligent cockpit system is configured to perform the steps of the method for controlling the switchable glass according to any one of claims 1 to 17.

20. An electronic device, comprising a processor and a memory, **characterized in that** the memory is configured to have programs or instructions stored thereon which run on the processor; and the programs or instructions, when executed by the processor, implement the steps of the method for controlling the switchable glass according to any one of claims 1 to 17.
